# EUROPEAN PATENT SPECIFICATION

(11) **EP 2 975 274 B1**
(45) Date of publication and mention of the grant of the patent: **25.04.2018**
(21) Application number: 15176524.5
(22) Date of filing: 13.07.2015
(51) Int. Cl.: F16B 2/18

(54) **CLAMP ARRANGEMENT**
KLEMMENANORDNUNG
DISPOSITIF DE SERRAGE

(30) Priority: 18.07.2014 GB 201412807
(43) Date of publication of application: 20.01.2016
(73) Proprietor: Preston Innovations Limited, Telford, Shropshire TF3 3BD (GB)
(72) Inventor: HUMPHRIES, Todd, Wolverhampton, West Midlands WV5 9DE (GB)
(74) Representative: Wynne-Jones, Lainé and James LLP

(56) References cited:
- EP-A1- 1 748 195
- FR-A5- 2 121 181
- GB-A- 2 415 896

## Description

This invention relates to fittings for an angler's seat box or angler's chair and in particular, but not necessarily exclusively, to a clamp arrangement for allowing accessories to be attached to a part of the seat box or chair structure and also to a seat box or chair leg extender arrangement for effectively extending the effective length of a seat box or chair leg. The invention also relates to clamp arrangements for general use where and item is to be longitudinally and rotationally adjustable with respect to a non-circular support element.

An angler's seat box is an item of equipment which serves the functions of providing a seat and foot support for an angler at the water's edge, storage of small items of tactile, and support for items such as the rod, bait container etc. A typical design of seat box includes an underlying chassis or frame with four or six adjustable legs which can be slidably adjusted and clamped in a particular position to allow for unevenness of the terrain on which the box is located. On top of the chassis is a seat box comprising a padded seat and storage drawers underneath is for storage of tackle. The chassis may provide a foot rest in front of the box. There is a desire to use the free ends of the legs to support other items of equipment in the required position.

GB1359480, an English publication of FR2121181, describes a clamping arrangement according to the preamble of claim 1, comprising two clamping members each having two opposing limbs, the limbs being spaced apart so as to define a slot. The device further comprises a cam, rotatably mounted in one limb and adapted so that when the clamp is in a closed position, it protrudes into the slot to grip the article to be clamped. A lever facilitates rotation of the cam.

GB2394505 describes a clamp arrangement which provides support for other equipment such as a rod rest etc, the clamp arrangement providing the dual functions of both being slidable vertically to allow the clamp (and attached equipment) to be brough to a convenient level relative to the seat box and also rotatable to allow the angular position thereof to be varied as required. The clamp arrangement described in GB2394505 is slidably adjustable and clamped, in use, on an elongate element which includes a length of generally polygonal cross section, the clamp arrangement comprising a deformable clamp sleeve rotatably mounted within a clamp member, a compression member operable, in use, to clamp the sleeve firmly against the elongate element, and means for attachment to, or supporting, a further item of equipment in use.

Whilst the described arrangement is highly effective an enabling an assembly attached thereto to be adjustably clamped, in use, on a non-circular support member, there is a desire to provide a quick and convenient means of removing and securing an item of equipment to the clamping arrangement, whilst it is *in situ* on the seat box or chair leg. This would not only enable items of equipment to be easily interchangeable, but also enable the clamp arrangement itself to be left on the seat box or chair leg after use, as the item of equipment attached thereto can be quickly and easily removed prior to storage.

Embodiments of the present invention seek to address at least some of these issues. In accordance with an aspect of the present invention, there is provided a clamp arrangement for being clamped, in use, on an elongate element, and comprising a first clamp portion for clamping said clamp arrangement to said elongate element, and a second clamp portion, connected thereto or formed integrally therewith, having a releasable locking mechanism for selectively attaching and detaching a further item of equipment thereon, in use, wherein said further item of equipment includes an elongate insert portion, and said locking mechanism comprises an open-ended channel for receiving said insert portion, said channel defining a longitudinal axis, and a cam lock assembly comprising:
a locking plate mounted for linear movement selectively into and out of said channel; and
a lever pivotally mounted externally of said channel for rotational movement about an axis substantially parallel to said longitudinal axis defined by said channel, said lever being communicably coupled to said locking plate and rotatable between a closed configuration in which said locking plate projects into said channel and movement thereof is prevented, and an open configuration in which said locking plate is released, characterised in that said channel for receiving said insert portion is substantially polygonal in cross-section.

The locking plate may be slidably mounted in an opening provided in a side wall of said channel, said locking plate having a proximal side edge and a distal side edge, said locking plate being slidably mounted in said opening for movement between said closed configuration in which said distal end thereof projects beyond an inner side wall of said channel, and said open configuration in which said distal end of said locking plate can be retracted from the channel. Linear movement of said locking plate may be effected along a line which is substantially orthogonal to said longitudinal axis defined by said channel.

The lever may comprise a cam portion configured such that, in said closed configuration, it abuts said proximal end of said locking plate, said lever being configured such that, when it is rotated into said open configuration, said cam portion is moved away from said proximal end of said locking plate, thereby releasing it.

The lever may include a tab portion which is contoured so as to substantially match a contour of an outer wall of said second clamp portion, said tab portion substantially abutting said outer wall of said second clamp portion in said closed configuration.

The elongate insert portion may also have a substantially polygonal cross-section. The advantage of this configuration is that rotation of the insert portion within the channel is thus prevented.

According to another aspect of the present invention, there is provided an angler's seat box or chair, having a vertical elongate leg, further comprising a clamp arrangement as defined above, wherein said first clamp portion thereof is clamped onto said leg.

These and other aspects of the present invention will be apparent from the following description of embodiments of the present invention, which will now be described by way of examples only and with reference to the accompanying drawings in which:
Figure 1 is a schematic front view of a clamp assembly according to an exemplary embodiment of the present invention;
Figure 1A is a schematic side view of a clamp assembly according to an exemplary embodiment of the present invention;
Figure 2 is a schematic front cross sectional view of the second clamp portion of a clamp assembly according to an exemplary embodiment of the present invention, illustrated in the closed configuration;
Figure 3 is a schematic front cross-sectional view of the second clamp portion of a clamp assembly according to an exemplary embodiment of the present invention, illustrated in the open configuration;
Figure 4A is a schematic side view of a clamp assembly according to an exemplary embodiment of the present invention, illustrated in the open configuration; and
Figure 4B is a schematic side view of a clamp assembly according to an exemplary embodiment of the present invention, illustrated in use, and in the closed configuration.

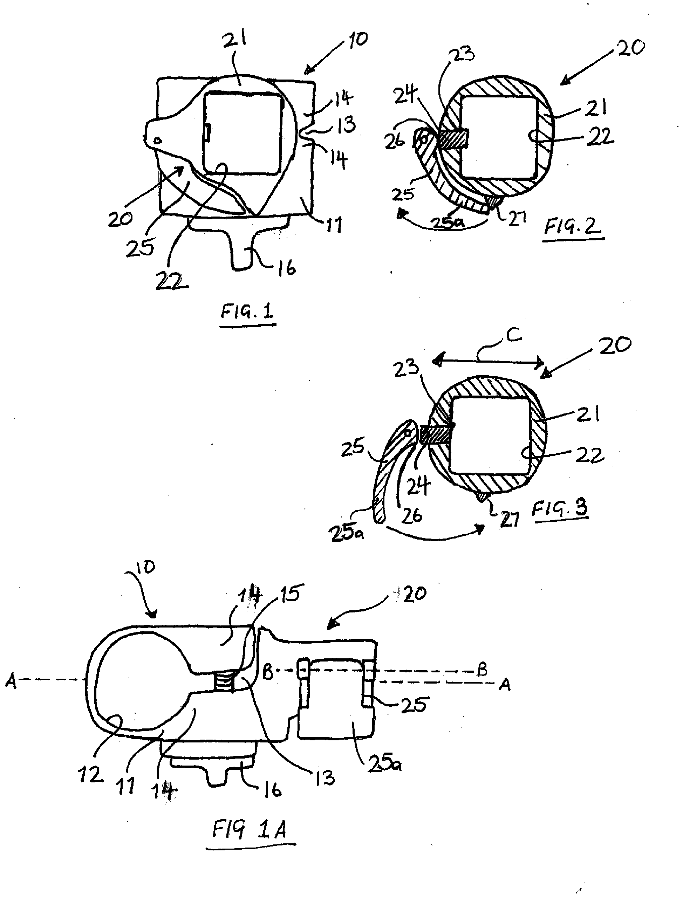

Referring to Figures 1 and 1A of the drawings, a clamp assembly according to an exemplary embodiment of the present invention comprises a first clamp portion 10 and a second clamp portion 20. The first clamp portion 10 comprises a clamp member 11 defining a clamp sleeve 12 for receiving, for example, a leg of an angler's seat box or chair. The clamp member 11 is split at 13 to provide two lugs 14 and a bolt 15 extends to an aligned passage in the lugs 14 to carry a hand wheel 16 designed to allow a compressive force to be exerted on the clamp member 11, thereby enabling a seat box or chair leg to be clamped therein, in use.

The second clamp portion 20 comprises a generally tubular neck 21, extending from the first clamp portion 10, and defining a channel 22 of generally polygonal cross-section. Referring additionally to Figures 2 and 3 of the drawings, the side wall of the neck 21 is provided with an opening 23 into the channel 22, in which is mounted a locking plate 24. The locking plate 24 is slidably moveable within the opening 23 in a horizontal linear manner, into and out of the channel 22, in the direction illustrated by the arrow C in Figure 3. It will be appreciated that the direction of linear movement of the locking plate 24 is substantially orthogonal to the longitudinal axis A-A defined by the channel 22.

The second clamp portion 20 further comprises a lever 25 pivotally mounted on the outer side of the wall of the neck 21 so as to be rotatable about the axis B-B, which is substantially parallel to the longitudinal axis A-A defined by the channel 22. The upper end of the lever 25 on the inner surface thereof (facing the outer side wall of the neck 21) is profiled to provide a cam portion 26. The lower tab portion 25a of the lever 25 is contoured to substantially match the contour of the outer wall of the neck 21 when in the closed configuration illustrated in Figure 2 of the drawings.

Thus, in the closed configuration, the cam portion 26 of the lever rests against the proximal edge of the locking plate 24, locking it in the illustrated configuration, with the distal end projecting into the channel 22. If an elongate portion of a further piece of equipment, such as a rod rest or bait holder, is located within the channel 22, the locking plate 24 acts to clamp it against the inner side walls of the channel 22 and prevent movement thereof in the longitudinal direction. Rotational movement thereof is, of course, additionally prevented by the polygonal profile of the channel 22 and the corresponding profile of the elongate portion of the above-mentioned piece of equipment.

When the lever 25 is rotated (in a clockwise direction, as viewed in Figure 2), the cam portion 26 is rotated away from the proximal end of the locking plate 24, releasing it, such that it is able to slide back out of the channel and, thereby, release the elongate portion of the above-mentioned piece of equipment from the channel 22, such that it can be removed by sliding it out of the channel along the longitudinal axis A-A defined thereby. The open configuration is illustrated in Figure 3 of the drawings.

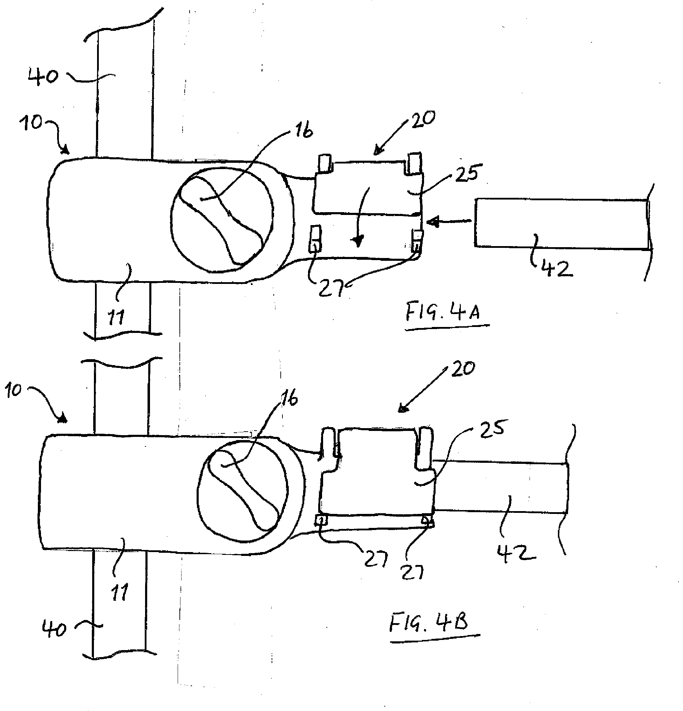

Referring additionally to Figures 4A of the drawings, in use, the first clamp portion 10 is attached to a seat box or chair leg 40 and clamped thereon using the hand wheel 16. An elongate portion 42 of a further piece of equipment, such as a rod rest or bait holder, having a generally polygonal profile and cross-section, is inserted into the channel 22 whilst the lever and locking plate 25, 24 are in the open configuration (illustrated additionally in Figure 3 of the drawings). In an alternative arrangement, an adapter (not shown) having a generally polygonal end portion may be inserted into the channel 22, the adapter providing, at the other end alternative attachment means, such as a screw-threaded bore for example, for receiving different types of equipment, as required.

In either case, and referring to Figure 4B of the drawings, once the polygonal end portion of the insert 42 has been fully inserted into the channel 22, the lever 25 is rotated (toward the outer surface of the neck 21) to push the locking plate 24 into the channel and against the insert 42, thereby locking it in position in the closed configuration (illustrated additionally in Figure 2 of the drawings). A pair of stops 27 define the limit of travel of the lever tab 25a, and the cam portion 26b of the lever 25 is profiled to bias the lever in the closed configuration until a manual force is applied to rotate it in the opposite direction to release the insert 42 and allow it to be removed from the channel 22.

It will be appreciated that the simplicity of the locking mechanism, coupled with the axis of rotation of the lever 25 relative to the neck 21 is such that the resultant assembly is readily able to be left attached to the seat box or chair leg 40, after use, and there are no significantly projecting parts which could cause an issue or become damaged during transportation and storage. Furthermore, the attaching and detaching of an insert or pice of equipment 42 can be quickly and conveniently achieved with one hand in view of the configuration of the locking cam.

It will be appreciated by a person skilled in the art that modifications and variations can be made to the described embodiments without departing from the scope of the invention as claimed.

## Claims

1. A clamp arrangement for being clamped, in use, on an elongate element, and comprising a first clamp portion (10) for clamping said clamp arrangement to said elongate element, and a second clamp portion (20), connected thereto or formed integrally therewith, having a releasable locking mechanism for selectively attaching and detaching a further item of equipment thereon, in use, wherein said further item of equipment includes an elongate insert portion, and said locking mechanism comprises an open-ended channel (22) for receiving said insert portion, said channel (22) defining a longitudinal axis, and a cam lock assembly comprising:
a lever (25) pivotally mounted externally of said channel (22) for rotational movement about an axis substantially parallel to said longitudinal axis defined by said channel (22), **characterised in that** said cam lock further comprises a locking plate (24) mounted for linear movement selectively into and out of said channel (22); and **in that** said lever (25) is communicably coupled to said locking plate (24) and rotatable between a closed configuration in which said locking plate projects into said channel (22) and movement thereof is prevented, and an open configuration in which said locking plate (24) is released,
said channel (22) for receiving said insert portion being substantially polygonal in cross-section

2. A clamp arrangement according to claim 1, wherein said locking plate (24) is slidably mounted in an opening (23) provided in a side wall of said channel (22), said locking plate (24) having a proximal side edge and a distal side edge, said locking plate (24) being slidably mounted in said opening for movement between said closed configuration in which said distal end thereof projects beyond an inner side wall of said channel (22), and said open configuration in which said distal end of said locking plate (24) can be retracted from the channel (22).

3. A clamp arrangement according to claim 2, wherein said linear movement of said locking plate (24) is effected along a line which is substantially orthogonal to said longitudinal axis defined by said channel (22).

4. A clamp arrangement according to claim 2 or claim 3, wherein said lever (25) comprises a cam portion (26) configured such that, in said closed configuration, it abuts said proximal end of said locking plate (24), said lever (25) being configured such that, when it is rotated into said open configuration, said cam portion (26) is moved away from said proximal end of said locking plate (24), thereby releasing it.

5. A clamp arrangement according to any of the preceding claims, wherein said lever includes a tab portion (25a) which is contoured so as to substantially match a contour of an outer wall of said second clamp portion, said tab portion (25a) substantially abutting said outer wall of said second clamp portion (20) in said closed configuration.

6. A clamp arrangement according to claim 1, wherein said elongate insert portion has a substantially polygonal cross-section.

7. An angler's seat box or chair, having a vertical elongate leg, further comprising a clamp arrangement according to any of the preceding claims, wherein said first clamp portion (10) thereof is clamped onto said leg.

## Patentansprüche

1. Klemmanordnung, die bei Benutzung auf ein langgestrecktes Element geklemmt wird und einen ersten Klemmteil (10) aufweist, der dazu dient, diese Klemmen-Anordnung an das langgestreckte Element anzuklemmen, und die einen zweiten Klemmteil (20) aufweist, der damit verbunden ist oder mit ihm aus einem Teil besteht und einen lösbaren Verriegelungs-Mechanismus zur selektiven Anbringung und Entfernung eines weiteren Ausstattungsteils zur Benutzung auf ihm hat, wobei dieser weitere Ausstattungsteil einen länglichen Einsatzabschnitt aufweist und der genannte Verriegelungs-Mechanismus mit einem Kanal (22) versehen ist, der ein offenes Ende hat und zur Aufnahme des Einsatzabschnittes dient, und dieser Kanal (22) eine Längsachse und eine Nockenarretierungs-Anordnung hat, umfassend einen Hebel (25), der außerhalb des Kanals (22) schwenkbar gelagert ist, um um eine Achse, die im wesentlichen parallel zu der Längsachse verläuft, welche von dem Kanal (22) gebildet wird, Drehbewegungen durchzuführen, **dadurch gekennzeichnet, daß** die Nocken-Verriegelungs-Anordnung des weiteren eine Verriegelungsplatte (24) aufweist, die so gelagert ist, daß sie selektiv in den Kanal (22) hinein und aus ihm heraus lineare Bewegungen ausführen kann; und daß der Hebel (25) mit der Verriegelungsplatte (24) gekoppelt ist und zwischen einer geschlossenen Konfiguration, in der die Verriegelungsplatte in den Kanal (22) hineinragt und seine Bewegung verhindert wird, und einer offenen Konfiguration, in der die Verriegelungsplatte (24) gelöst ist, drehbar ist, wobei der Kanal (22) zur Aufnahme des Einsatzabschnittes einen im wesentlichen polygonalen Querschnitt hat.

2. Klemmanordnung nach Anspruch 1, **dadurch gekennzeichnet, daß** die Verriegelungsplatte (24) in einer Öffnung (23) gleitend gelagert ist, die in einer Seitenwand des Kanals (22) ausgebildet ist, daß die Verriegelungsplatte (24) einen nahe liegenden Seitenrand und einen entfernt liegenden Seitenrand aufweist, daß die Verriegelungsplatte (24) ferner in der Öffnung zwecks Bewegung zwischen der geschlossenen Konfiguration, in der ihr entfernt liegendes Ende über eine innere Seitenwand des Kanals (22) hinausragt, und der genannten offenen Konfiguration, in der das entfernt liegende Ende der Verriegelungsplatte (24) aus dem Kanal (22) zurückgezogen sein kann, gleitend gelagert ist.

3. Klemmanordnung nach Anspruch 2, **dadurch gekennzeichnet, daß** die lineare Bewegung der Verriegelungsplatte (24) längs einer Linie erfolgt, die im wesentlichen orthogonal zu der Längsachse verläuft, welche durch den Kanal (22) gebildet wird.

4. Klemmanordnung nach Anspruch 2 oder 3, **dadurch gekennzeichnet, daß** der Hebel (25) einen Nockenteil (26) aufweist, der so ausgebildet ist, daß er in der geschlossenen Konfiguration an dem entfernt liegenden Ende der Verriegelungsplatte (24) anstößt, und daß der Hebel (25) so ausgebildet ist, daß dann, wenn er in die offene Konfiguration gedreht wird, der Nockenteil (26) von dem entfernt liegenden Ende der Verriegelungsplatte (24) weg bewegt wird, um sie dadurch zu lösen.

5. Klemmanordnung nach einem der vorhergehenden Ansprüche, **dadurch gekennzeichnet, daß** der Hebel einen Zapfenteil (25a) aufweist, der so geformt ist, daß er im wesentlichen zu einer Form einer Außenwand des zweiten Klemmteils paßt, und daß dieser Zapfenteil (25a) im wesentlichen an der Außenwand des zweiten Klemmteils (20) in der geschlossenen Konfiguration anstößt.

6. Klemmanordnung nach Anspruch 1, **dadurch gekennzeichnet, daß** der langgestreckte Einsatzabschnitt einen im wesentlichen polygonalen Querschnitt hat.

7. Anglersitzkasten oder Stuhl mit einem vertikalen, länglichen Bein, der ferner eine Klemmanordnung gemäß einem der vorhergehenden Ansprüche aufweist, wobei der erste Klemmenteil (10) der Anordnung auf das Bein geklemmt ist.

## Revendications

1. Dispositif de serrage à serrer, en utilisation, sur un élément allongé, et comprenant une première partie de serrage (10) pour serrer ledit dispositif de serrage sur ledit élément allongé, et une seconde partie de serrage (20), reliée à celui-ci ou formée d'un seul tenant avec celui-ci, ayant un mécanisme de verrouillage libérable pour attacher et détacher de manière sélective un autre équipement sur celui-ci, en utilisation, ledit autre équipement comprenant une partie d'insert allongée, et ledit mécanisme de verrouillage comprenant un canal à extrémités ouvertes (22) pour recevoir ladite partie d'insert, ledit canal (22) définissant un axe longitudinal, et un ensemble verrou de came comprenant :
un levier (25) monté de manière pivotante à l'extérieur dudit canal (22) pour réaliser un mouvement de rotation autour d'un axe sensiblement parallèle audit axe longitudinal défini par ledit canal (22),
**caractérisé par le fait que** ledit verrou de came comprend en outre une plaque de verrouillage (24) montée pour réaliser un mouvement linéaire de manière sélective dans et hors dudit canal (22) ; et
**par le fait que** ledit levier (25) est couplé de manière communicative à ladite plaque de verrouillage (24) et est apte à tourner entre une configuration fermée, dans laquelle ladite plaque de verrouillage fait saillie dans ledit canal (22) et un mouvement de celle-ci est empêché, et une configuration ouverte dans laquelle ladite plaque de verrouillage (24) est libérée,
ledit canal (22) servant à recevoir ladite partie d'insert étant sensiblement polygonal en coupe transversale.

2. Dispositif de serrage selon la revendication 1, dans lequel ladite plaque de verrouillage (24) est montée de manière coulissante dans une ouverture (23) prévue dans une paroi latérale dudit canal (22), ladite plaque de verrouillage (24) ayant un bord latéral proximal et un bord latéral distal, ladite plaque de verrouillage (24) étant montée de manière coulissante dans ladite ouverture pour réaliser un mouvement entre ladite configuration fermée, dans laquelle son extrémité distale précitée fait saillie au-delà d'une paroi latérale interne dudit canal (22), et ladite configuration ouverte dans laquelle ladite extrémité distale de ladite plaque de verrouillage (24) peut être rétractée vis-à-vis du canal (22) .

3. Dispositif de serrage selon la revendication 2, dans lequel ledit mouvement linéaire de ladite plaque de verrouillage (24) est réalisé le long d'une ligne qui est sensiblement orthogonale audit axe longitudinal défini par ledit canal (22).

4. Dispositif de serrage selon la revendication 2 ou la revendication 3, dans lequel ledit levier (25) comprend une partie came (26) configurée de telle sorte que, dans ladite configuration fermée, elle est en appui sur ladite extrémité proximale de ladite plaque de verrouillage (24), ledit levier (25) étant configuré de telle sorte que, lorsqu'il est tourné dans ladite configuration ouverte, ladite partie came (26) est éloignée de ladite extrémité proximale de ladite plaque de verrouillage (24), ce qui permet de la libérer.

5. Dispositif de serrage selon l'une quelconque des revendications précédentes, dans lequel ledit levier comprend une partie languette (25a) qui est profilée de façon à correspondre sensiblement à un contour d'une paroi externe de ladite seconde partie de serrage, ladite partie languette (25a) étant sensiblement en appui sur ladite paroi externe de ladite seconde partie de serrage (20) dans ladite configuration fermée.

6. Dispositif de serrage selon la revendication 1, dans lequel ladite partie d'insert allongée a une section transversale sensiblement polygonale.

7. Chaise ou panier-siège d'un pêcheur à la ligne, ayant un pied allongé vertical, comprenant en outre un dispositif de serrage selon l'une quelconque des revendications précédentes, ladite première partie de serrage (10) de celui-ci étant serrée sur ledit pied.
